(19) Europäisches Patentamt
European Patent Office
Office européen des brevets

(11) **EP 4 563 897 A1**

(12) **EUROPEAN PATENT APPLICATION**
published in accordance with Art. 153(4) EPC

(43) Date of publication:
04.06.2025 Bulletin 2025/23

(51) International Patent Classification (IPC):
*F24C 7/08* (2006.01)    *F24C 3/12* (2006.01)
*H05B 6/68* (2006.01)    *F24C 15/00* (2006.01)
*H04N 23/57* (2023.01)    *G06F 3/00* (2006.01)
*G06V 20/68* (2022.01)    *G06N 20/00* (2019.01)

(21) Application number: 24760484.6

(22) Date of filing: 23.01.2024

(86) International application number:
PCT/KR2024/001087

(87) International publication number:
WO 2024/177292 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.02.2023 KR 20230022455

(71) Applicant: Samsung Electronics Co., Ltd.
Suwon-si, Gyeonggi-do 16677 (KR)

(72) Inventors:
• NAMKOONG, Byul
  Suwon-si Gyeonggi-do 16677 (KR)
• LEE, Kyounghoon
  Suwon-si Gyeonggi-do 16677 (KR)
• LEE, Dongseok
  Suwon-si Gyeonggi-do 16677 (KR)

(74) Representative: Appleyard Lees IP LLP
15 Clare Road
Halifax HX1 2HY (GB)

(54) **COOKING APPARATUS AND CONTROLLING METHOD THEREFOR**

(57) A cooking apparatus including: a cooking chamber configured to accommodate an object; a sensor module configured to measure a plurality of cooking state determination factors of the object during cooking of the object in the cooking chamber; a display; and a controller configured to perform control to: obtain cooking state probability data for each cooking stage of a plurality of cooking stages of the object from the measured plurality of cooking state determination factors, and output, via the display, information about a cooking state of the object corresponding to a highest cooking state probability of the obtained cooking state probability data.

**FIG. 3**

EP 4 563 897 A1

## Description

[Technical Field]

The disclosure relates to a cooking apparatus and a method of controlling the same, and more specifically, to a cooking apparatus including a sensor module measuring a plurality of cooking state determination factors during cooking, and a method of controlling the same.

[Background Art]

A cooking apparatus is an appliance for heating and cooking an object in a cooking chamber.

Such cooking apparatuses may be classified into a gas cooking appliance that heats food by burning gas, an electric cooking appliance that heats food by converting electrical energy into heat energy, a microwave oven that heats food by radiating microwaves to the food, a gas stove that heats food by burning gas, and an induction range that heats food by generating a magnetic field.

In order for a cooking apparatus to cook automatically, a cooking state is required to be checked, and in a case where the cooking state is not accurately determined, the food may be overcooked, causing user inconvenience.

[Disclosure]

[Technical Problem]

According the disclosure, a cooking apparatus and a method of controlling the same may fuse algorithms corresponding to a plurality of cooking state determination factors including gas data, temperature data, and image data, and detect a state of food in the cooking apparatus through the algorithm fusion, thereby addressing a disadvantage of using each algorithm separately and reducing cooking mistakes.

Technical objects that may be achieved by the disclosure are not limited to the above-mentioned objects, and other technical objects not mentioned will be clearly understood by one of ordinary skill in the art to which the disclosure belongs from the following description.

[Technical Solution]

According to an embodiment, a cooking apparatus may include: a cooking chamber configured to accommodate an object; a sensor module configured to measure a plurality of cooking state determination factors of the object during cooking of the object in the cooking chamber; a display; and a controller configured to perform control to: obtain cooking state probability data for each cooking stage of a plurality of cooking stages of the object from the measured plurality of cooking state determination factors, and output, via the display, information about a cooking state of the object corresponding to a highest cooking state probability of the obtained cooking state probability data.

According to an embodiment, a method of controlling a cooking apparatus including a cooking chamber configured to accommodate an object, a sensor module configured to measure a plurality of cooking state determination factors of the object during cooking of the object in the cooking chamber, and a display, the method may include: obtaining cooking state probability data for each cooking stage of a plurality of cooking stages of the object from the measured plurality of cooking state determination factors; and outputting, via the display, information about a cooking state of the object corresponding to a highest cooking state probability of the obtained cooking state probability data.

According to an embodiment, a cooking apparatus may include: a cooking chamber configured to accommodate an object; a sensor module configured to measure a plurality of cooking state determination factors of the object during cooking of the object in the cooking chamber; a display; communication circuitry configured to communicate with an external server; and a controller configured to perform control to: transmit, to the external server via the communication circuitry, cooking state probability data for each cooking stage of a plurality of cooking stages of the object from the measured plurality of cooking state determination factors, receive, from the external server via the communication circuitry, information about a cooking state of the object corresponding to a highest cooking state probability of the transmitted cooking state probability data, and output, via the display, the information about the cooking state of the object.

[Advantageous Effects]

According the disclosure, even when a user is not located close to a cooking apparatus, the user may immediately check a cooking state of food from a user terminal device, thereby improving user convenience.

According the disclosure, a user may check a cooking state of food without opening a door of a cooking apparatus, thereby reducing cooking mistakes.

According the disclosure, a user may monitor and control a cooking process, thereby increasing convenience.

[Description of Drawings]

FIG. 1 illustrates a front view of a cooking apparatus according to an embodiment.
FIG. 2 illustrates a schematic side view of a cooking apparatus according to an embodiment.

FIG. 3 illustrates a control block diagram of a cooking apparatus according to an embodiment.

FIG. 4 is a schematic view illustrating that a controller of a cooking apparatus generates a learning model according to an embodiment.

FIG. 5 is a schematic view illustrating that a controller of a cooking apparatus outputs a cooking state through a learning model according to an embodiment.

FIG. 6 is a schematic view illustrating that a controller of a cooking apparatus derives an output value according to an input value based on machine learning according to an embodiment.

FIG. 7 illustrates communication among a server device, a user terminal device, and a cooking apparatus according to an embodiment.

FIG. 8 illustrates that an overcooking prediction alert is output to a user terminal device by a cooking apparatus according to an embodiment.

FIG. 9 is a flowchart illustrating a method of controlling a cooking apparatus according to an embodiment.

FIG. 10 is a flowchart illustrating the control method according to an embodiment, in continuation from FIG. 9.

[Modes of the Disclosure]

Embodiments described in the specification and configurations shown in the accompanying drawings are merely examples of the disclosure, and various modifications may replace the embodiments and the drawings of the disclosure at the time of filing of the application.

With regard to description of drawings, similar reference numerals may be used for similar or related components.

A singular form of a noun corresponding to an item may include one item or a plurality of the items unless context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

It will be understood that the terms "first", "second", etc., may be used only to distinguish one component from another, not intended to limit the corresponding component in other aspects (e.g., importance or order).

When it is said that one (e.g., first) component is "coupled" or "connected" to another (e.g., second) component, with or without the terms "functionally" or "communicatively", it means that one component may be connected to the other component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it may be directly on the other component or intervening components may also be present.

The term "and/or" includes any and all combinations of one or more of a plurality of associated listed items.

Hereinafter, an operation principle and embodiments of the disclosure will be described in detail with reference to the accompanying drawings.

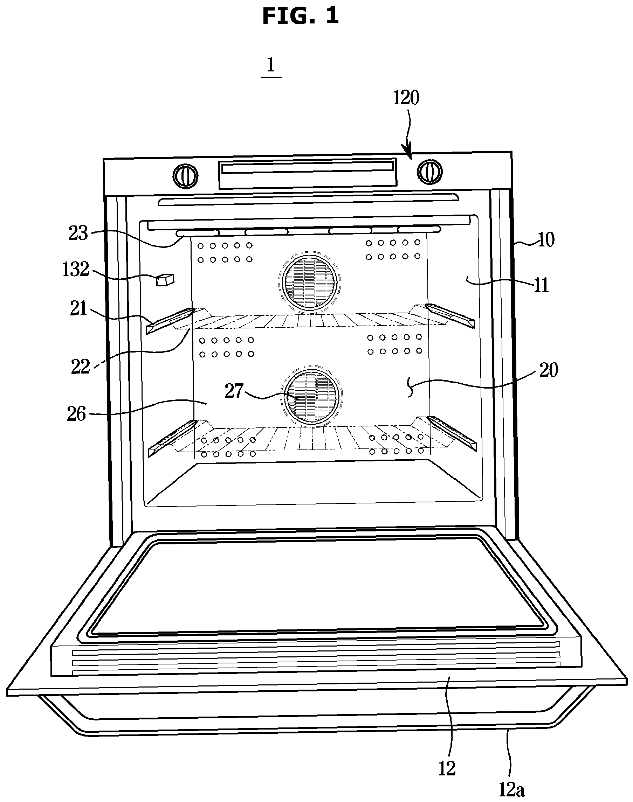

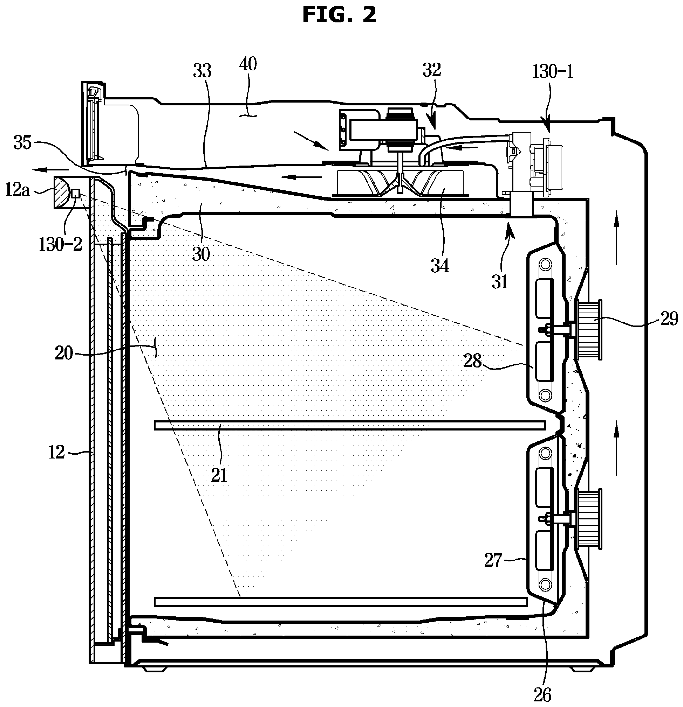

FIG. 1 illustrates a front view of a cooking apparatus according to an embodiment. FIG. 2 illustrates a schematic side view of a cooking apparatus according to an embodiment.

Referring to FIG. 1 and FIG. 2, a cooking apparatus 1 according to an embodiment may include an outer case 10 forming an exterior of the cooking apparatus 1 and an inner case 11 that is arranged inside the outer case 10 to form a cooking chamber 20 in the cooking apparatus 1.

The outer case 10 and the inner case 11 are approximately in a shape of a box with an opening on the front, and may be opened and closed by a door 12 disposed on the front.

The door 12 is provided in a shape corresponding to the opening at the front of the cooking chamber 20. The door 12 is rotatably hinged to a lower portion of the inner case 11 to open or close the cooking chamber 20. A handle 12a is provided on the front of the door 12 to facilitate opening and closing of the door 12.

The cooking chamber 20 in the inner case 11 may accommodate an object to be cooked (hereinafter, referred to as 'food').

Guide rails 21 are arranged on both sides of the cooking chamber 20. The guide rails 21 may be provided symmetrically on both sides of the cooking chamber 20. A rack 22 on which food or containers containing food are placed may be detachably coupled to the guide rails 21.

Because the rack 22 is easily slid in or out along the guide rails 21, a user may easily move food into or out of the cooking chamber 20 using the rack 22.

A heat source 141 for generating heat to heat food placed on the rack 22 may be installed at an upper portion of the cooking chamber 20. The heat source 141 generates heat using electricity or gas, and a type of the heat source 141 may be determined depending on the cooking apparatus 1.

A temperature sensor 132 may be provided in the cooking chamber 20 to measure a temperature of the cooking chamber 20. The temperature sensor 132 may be arranged on a side of the cooking chamber 20 as shown in FIG. 1, but a position of the temperature sensor 132 is not limited thereto.

Meanwhile, although it is illustrated in FIG. 1 that the heat source 141 is arranged at the upper portion of the cooking chamber 20, a position of the heat source 141 is not limited thereto. In addition, the heat source 141 may be omitted depending on a type of cooking apparatus 1.

For example, in a case where the cooking apparatus 1 is a microwave oven that heats food by radiating microwaves to the food, the heat source 141 may be omitted and a microwave generating device may be included in the cooking apparatus 1 instead of the heat source 141.

A circulation fan 28 may be provided at a rear of the cooking chamber 20 to flow liquid inside the cooking chamber 20. The circulation fan 28 may be rotated by a circulation motor 29 coupled to the circulation fan 28. As the circulation fan 28 rotates, a liquid flow occurs by the circulation fan 28. The heat generated in the heat source 141 may be uniformly transferred to the cooking chamber 20 by the liquid flow, and thus the food may be cooked evenly.

A fan cover 26 formed of a plate-shaped member may be provided in front of the circulation fan 28. A circulation port 27 may be formed in the fan cover 26 to allow liquid to flow by the circulation fan 28.

A user interface 120 may be provided on the front of the cooking apparatus 1. The user interface 120 may receive a control command for the cooking apparatus 1 from a user, or may display various information related to operations and settings of the cooking apparatus 1 to the user.

In addition, the cooking apparatus 1 may further include an electronic equipment chamber. The electronic equipment chamber may be arranged between the outer case 10 and the inner case 11.

The electronic equipment chamber may include various electronic equipment required to operate the cooking apparatus 1. For example, a control circuit board for controlling the user interface 120, and a main circuit board for controlling the heat source 141 and the circulation motor may be provided in the electronic equipment chamber.

The electronic equipment chamber may be arranged on the upper portion of the cooking chamber 20, but a position of the electronic equipment chamber is not limited thereto. For example, the electronic equipment chamber may be arranged below the cooking chamber 20 or at the rear of the cooking chamber 20.

An insulator 30 may be provided between the cooking chamber 20 and the electronic equipment chamber to prevent heat from leaking from the cooking chamber 20 and to protect electronic equipment from the heat of the cooking chamber 20.

A through hole 31 may be provided between the electronic equipment chamber and the cooking chamber 20 to allow liquid to flow. A sensor module 130 may be coupled to the through hole 31 provided between the electronic equipment chamber and the cooking chamber 20 to communicate with the cooking chamber 20. The sensor module 130 will be described in detail later.

In addition, the electronic equipment chamber may be cooled by an exhaust assembly. Electronic equipment is vulnerable to heat. The exhaust assembly may be provided in the electronic equipment chamber to cool the electronic equipment and protect the electronic equipment.

The exhaust assembly may prevent damage to the electronic equipment due to heat by forcibly exhausting the liquid in the electronic equipment to the outside of the cooking apparatus 1.

The exhaust assembly may include an exhaust duct that draws in liquid from the electronic equipment chamber and exhausts to the front of the cooking apparatus 1, an exhaust fan that forces the liquid in the electronic equipment chamber to flow, an exhaust motor 142 to drive the exhaust fan, and a support bracket to support the exhaust motor.

The exhaust duct may be formed in a shape of venturi tube whose height and cross-sectional area progressively decreases toward the front of the cooking apparatus 1. Accordingly, a speed of the liquid in the exhaust duct may increase, while a pressure of the liquid in the exhaust duct may decrease toward the front of the cooking apparatus 1.

The exhaust motor generates rotational force to drive the exhaust fan, and may include a stator and a rotor. The stator may include a bobbin on which a coil may be wound, and a core that forms a magnetic field when current is applied to the coil.

The sensor module 130 may be provided outside the cooking chamber 20, and may measure gas data and humidity data of the liquid discharged from the cooking chamber 20. A type of gas detected by the sensor module 130 is not limited. Gas data may be measured by a gas sensor 131 and humidity data may be measured a humidity sensor 134 simultaneously. In addition, a position of the sensor module 130 is not limited and the sensor module 130 may be provided inside the cooking chamber 20.

For example, the sensor module 130 may include the temperature sensor 132 using a probe, and the temperature sensor 132 may measure an internal temperature of food by probing into the food.

As shown in FIG. 2, the sensor module 130 may also include an image sensor 133 such as a camera.

Referring to FIG. 2, the image sensor 133 may be mounted inside the handle 12a to face the cooking chamber 20. Specifically, the image sensor 133 may be mounted within an handle extension through a handle opening provided in the handle extension, and may be protected from the outside by an image sensor cover. The image sensor 133 may be arranged to capture an image of the interior of the cooking chamber 20 through a transparent section. The image sensor 133 may capture the interior of the cooking chamber 20.

The image sensor 133 may observe the interior of the cooking chamber 20 through the transparent section. The image sensor 133 may preferably have a vertical shooting angle of approximately 60 degrees and a horizontal shooting angle of approximately 100 degrees.

The transparent section may be made of a transparent material, and a plurality of glass members may be provided at a position corresponding to the transparent section inside a door unit. Accordingly, even in a case where the image sensor 133 is located outside the transparent section, the image sensor 133 may capture the interior of the cooking chamber 20 without being located inside the cooking chamber 20 or the door 12.

In addition, because the cooking chamber 20 maintains a temperature of approximately 200 degrees Celsius during cooking, the image sensor 133 may be damaged by heat in a case where the image sensor 133 is placed adjacent to the cooking chamber 20.

To prevent the above, the image sensor 133 may be disposed on the handle 12a to be spaced apart from the cooking chamber 20. Because the image sensor 133 is arranged to be spaced apart from the cooking chamber 20, damage caused by heat generated in the cooking chamber 20 may be reduced. Thus, according to the disclosure, reliability of the image sensor 133 may be ensured.

As shown in FIG. 2, the image sensor 133 may be arranged eccentrically to one side by a preset length from a center of a longitudinal direction of the handle extension.

Because the image sensor 133 is arranged eccentrically to one side from the center of the longitudinal direction of the handle extension, when a user grips the handle 12a, contamination of the image sensor 133 by the user's hand may be prevented.

Specifically, a user may hold the handle 12a with food on his or her hands during cooking. In general, when a user holds the handle 12a to open or close the door unit 40, the user holds the center of the handle 12a. In this instance, in a case where the camera 400 is located approximately at the center of the handle extension, lens of the image sensor 133 may be contaminated by food or fingerprints of the user's hands.

However, the image sensor 133 according to an embodiment is arranged eccentrically to one side by the preset length from the center of the handle 12a, and thus the image sensor 133 may be prevented from being contaminated by the user's hand when the user holds the handle 12a.

In addition, the image sensor 133 may be disposed to capture the entire interior of the cooking chamber 20, considering a maximum shooting angle (maximum field of view of the image sensor 133.

The image sensor 133 may capture the interior of the cooking chamber 20 and transmit the captured image or video to a controller 100. The controller 100 may analyze the received image or video to recognize a location of the food in the cooking apparatus 1. In addition, the controller 100 may detect an average brightness or a maximum brightness within a range of recognized food, and may obtain cooking state probability data of the food based on the above.

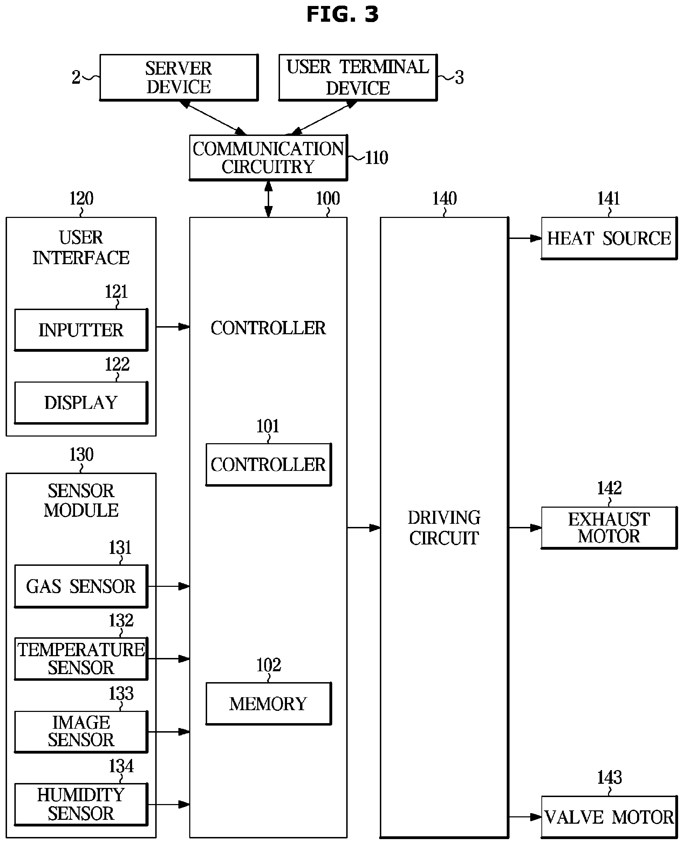

FIG. 3 illustrates a control block diagram of a cooking apparatus according to an embodiment.

As shown in FIG. 3, the cooking apparatus 1 according to an embodiment may include a communication circuitry 110, the user interface 120, the sensor module 130, a driving circuit 140, and the controller 100 for controlling the above components.

The communication circuitry 110 may be connected to an external device including home appliance, a server device 2, and a user terminal device 3, and may transmit and receive data with the external device. Specifically, the communication circuitry 110 may transmit information about a cooking state of an object to be cooked (food) to the external device or receive a control command from the external device.

The home appliance may be at least one of various types of electronic devices. For example, the home appliance may include at least one of a refrigerator, a dishwasher, an electric range, an electric oven, an air conditioner, a clothing care apparatus, a washing machine, a dryer, or a microwave oven, without being limited thereto. The aforementioned home appliances are only examples, and in addition to the aforementioned home appliances, other types of electronic devices such as a vacuum cleaner or a television may be included in the home appliance. Furthermore, any device capable of being connected to another electronic device, the user terminal device 3 or the server device 2 and performing the operations to be described below may be included in the home appliance.

The server device 2 may include a communication module communicating with another server device, home appliance, or the user terminal device 3. The server device 2 may include at least one processor processing data received from the other server device, home appliance, or the user terminal device 3. The server device 2 may include at least one memory storing programs for processing data or processed data. The server device 2 may be implemented as a variety of computing devices, such as a workstation, a cloud, a data drive, a data station, and the like. The server device 2 may be implemented as one or more server physically or logically separated based on a function, detailed configuration of function, or data, and may transmit and receive data through communication between servers and process the transmitted and received data.

The server device 2 may perform functions such as managing a user account, registering the home appliance in association with the user account, managing or controlling the registered home appliance. For example, a user may access the server device 2 via the user terminal device 3 and may generate a user account. The user account may be identified by an identifier (ID) and a password set by the user. The server device 2 may register the home appliance to the user account according to a predetermined procedure. For example, the server device 2 may link identification information of the home appliance (such as a serial number or MAC address) to the user account to register, manage, and control the home appliance. The user terminal device 3 may include a communication module capable of communicating with the server device 2 or the home appliance. The user terminal device 3 may include a user interface receiving a user input or outputting information to a user. The user terminal device 3 may include at least one processor controlling an operation of the user terminal device 3, and at least one memory storing a program for controlling the operation of the user terminal device 3.

The user terminal device 3 may be carried by a user, or placed in a user's home or office, or the like. The user terminal device 3 may include a personal computer, a terminal, a portable telephone, a smartphone, a handheld device, a wearable device, a display, and the like, without being limited thereto.

The memory of the user terminal device 3 may store a program for controlling the cooking apparatus 1, i.e. an application. The application may be sold installed on the user terminal device 3, or may be downloaded from an external server for installation.

By executing the application installed on the user terminal device 3 by a user, the user may access the server device 2, generate a user account, and perform communication with the server device 2 based on the login user account to register the home appliance.

For example, by operating the home appliance to enable the home appliance to access the server device 2 according to a procedure guided by the application installed on the user terminal device 3, the server device 2 may register the home appliance with the user account by assigning the identification information (such as a serial number or MAC address) of the home appliance to the corresponding user account.

A user may control the cooking apparatus 1 using the application installed on the user terminal device 3. For example, by logging into a user account with the application installed on the user terminal device 3, the home appliance registered in the user account appears, and by inputting a control command for each of the home appliance, a control command may be transmitted to the home appliance via the server device 2.

The user terminal device 3 may transmit information about a user to the server device 2 or the home appliance through the communication module. For example, the user terminal device 3 may transmit information about a user's location, a user's health status, a user's preference, a user's schedule, etc. to the server device 2. The user terminal device 3 may transmit information about the user to the server device 2 based on the user's prior authorization.

The home appliance, the user terminal device 3, or the server device 2 may use artificial intelligence (AI) to determine a control command. For example, the server device 2 may receive and process information about an operation or a state of the home appliance and information about a user of the user terminal device 3 using techniques such as artificial intelligence, and may transmit a processing result or a control command to the user terminal device 3 or the home appliance based on the processing result.

A communication method between the communication circuitry 110 and external device is not limited. The communication circuitry 110 may include at least one of a short range communication module or a long range communication module.

The cooking apparatus 1 may communicate with a nearby external device using a short range communication method. Here, the short range communication module may use at least one communication method of Bluetooth, Bluetooth Low Energy (BLE), an Infrared Data Association (IrDA), Ultra-Wide Band (UWB), or Near Field Communication (NFC).

The long range communication module may include a communication module performing various long range communications, and may include the communication circuitry 110. The communication circuitry 110 may transmit and receive a wireless signal with at least one of a base station, an external terminal, or a server on a mobile communication network. In addition, the long range communication module may communicate with external devices such as the server device 2, the user terminal device 3, and/or other home appliances through a nearby Access Point (AP). The AP may connect a Local Area Network (LAN) to which the cooking apparatus 1 or the user terminal device 3 is connected to a Wide Area Network (WAN) to which a communication server is connected. Accordingly, the cooking apparatus 1, the server device 2, and/or the user terminal device 3 may be connected to the communication server through the Wide Area Network (WAN) and communicate with each other.

The user interface 120 is provided on the front of the cooking apparatus 1, and may receive a control command from a user and display information related to an operation of the cooking apparatus 1.

The user interface 120 may include an inputter 121 receiving a control command, and a display 122 displaying information related to driving.

The inputter 121 may be implemented as at least one input means such as a push button, a membrane button, a dial, or a slider switch, without being limited thereto.

The display 122 may be provided in various types of display panels, such as a Plasma Display Panel (PDP) panel, a Liquid Crystal Display (LCD) panel, a Light Emitting Diode (LED) panel, an Organic Light Emitting Diode (OLED) panel, Active-Matrix Organic Light Emitting Diode (AMOLED), or a curved display panel, without being limited thereto.

The display 122 may also be implemented as a Touch Screen Panel (TSP) that further includes a touch input means that detects the user's contact. In a case where the display 122 is implemented as a touch screen panel, a user may input a control command by touching the display 122.

The sensor module 130 may include the gas sensor 131, the temperature sensor 132, the image sensor 133, and the humidity sensor 134, without being limited thereto. The sensor module 130 may further include a sensor for determining a cooking state.

The gas sensor 131 may detect a gas value generated by an object to be cooked (food) during cooking. The gas sensor 131 may measure components of the gas generated by the food, and then control the cooking apparatus according to the measurement result or generate a signal corresponding to the amount of a specific gas component contained in the gas in order to provide a warning.

The temperature sensor 132 may measure a temperature of food heated by the heat source 141 during cooking, and may be divided into a contact temperature sensor 132 and a non-contact temperature sensor 132. Although the temperature sensor 132 is illustrated in FIG. 1 as an internal temperature sensor that measures a temperature inside the cooking chamber 20, the temperature sensor 132 is not limited thereto. The temperature sensor 132 may include a probe-based temperature sensor that measures an internal temperature of the food by probing into the food. That is, the probe-based temperature sensor 132 may directly measure the temperature within the food by inserting a tube-shaped probe into the food.

The image sensor 133 may include a device or electronic component that detects object information and convert the information into an electrical image signal, and may determine a cooking state by obtaining image data including color data.

The humidity sensor 134 refers to a sensor for detecting humidity using various phenomena (physical and chemical phenomena) related to moisture in the air. The humidity sensor 134 may measure a humidity of liquid generated during cooking, thereby determining the cooking state.

The memory 102 may store various information required for driving the cooking apparatus 1. Specifically, the memory 102 may store an operating system or program required for driving the cooking apparatus 1, or may store data required for driving the cooking apparatus 1.

For example, the memory 102 may store cooking information about an object to be cooked (food). The cooking information refers to a method for properly cooking food, and may include at least one of a preheating temperature of the cooking chamber 20, a cooking temperature of the cooking chamber 20, or a cooking guide time.

Here, the cooking guide time may include a minimum cooking time expected to cook the food and a maximum cooking time to prevent the food from burning. That is, the minimum cooking time and the maximum cooking time of food may be determined by the cooking guide time. In addition, because an appropriate recipe varies from food to food, cooking information may be provided for each food. The memory 102 may also store data on cooking time for each food and for each temperature.

The memory 102 may include a volatile memory such as a Static Random Access Memory (SRAM) or a Dynamic Random Access Memory (DRAM) for temporary data storage, and a non-volatile memory such as a Read Only Memory (ROM), an Erasable Programmable Read Only Memory (EPROM), an Electrically Erasable Programmable Read Only Memory (EEPROM), etc., for long-term data storage.

The driving circuit 140 may drive each component according to a control signal from the controller 100. Specifically, the driving circuit 140 may heat the interior of the cooking chamber 20 by driving the heat source 141 according to a control signal. Also, the driving circuit 140 may drive the exhaust motor in the electronic equipment chamber according to a control signal to discharge liquid in the electronic equipment chamber to the outside, thereby cooling the electronic equipment chamber. In addition, the driving circuit 140 may block an inflow of liquid into the sensor module 130 by driving a valve motor 143 provided in the sensor module 130 according to a control signal. Furthermore, the driving circuit 140 may capture food in the cooking chamber 20 by transmitting a driving signal to the image sensor 133.

The controller 100 may output a control signal to control the cooking apparatus 1. The controller 100 may correspond to one or more processors 101. In this instance, the processor 101 may be implemented as an array of multiple logic gates, or may be implemented as a combination of the general-purpose microprocessor 101 and the memory 102 storing a program executable on the microprocessor 101.

The controller 100 may control each component so that the food is cooked according to a user's control command.

Specifically, the controller 100 may obtain cooking state probability data for each cooking stage from a plurality of cooking state determination factors, and may output a cooking state corresponding to the highest probability data to the display 122.

In addition, the controller 100 may obtain the cooking state probability data by converting the cooking state, obtained from each of the plurality of cooking state determination factors, into probability data for each cooking stage.

In addition, the controller 100 may obtain the cooking state probability data by applying a preset weight to the probability data for each cooking stage, and input the probability data for each cooking stage into a machine learning model trained from cooking state result data.

Conventionally, a cooking state is determined from each of different sensors without sensor fusion, leading to a reduction in accuracy of determining the cooking state in sensor limitation. Specifically, in a case where a cooking environment changes significantly, for example, a door is opened/closed during cooking or frozen food is cooked without thawing, an accuracy of the gas sensor 131 may decrease. In a case where the temperature sensor 132 uses a probe, the probe may not be properly inserted into a location other than the center of the food, or the probe may not be used correctly for the food in which the probe may not be inserted or the food that does not emit much gas, and thus an accuracy of the temperature sensor 132 may decrease. In addition, the accuracy of the image sensor 133 may decrease in a case where a food color is close to black or there is foreign matter on the transparent section.

However, the cooking apparatus 1 according to an embodiment may fuse cooking state determination algorithms of each of the gas sensor 131, the temperature sensor 132, and the image sensor 133 in order to detect a state of food in the cooking apparatus 1. Accordingly, disadvantages caused by using each algorithm separately may be corrected and cooking mistakes for users of the cooking apparatus 1 may be reduced. **In** addition, according to the disclosure, a simple model and a minimum amount of data may be used to determine cooking states, thereby increasing industrial usefulness.

Hereinafter, a process of determining a cooking state by the cooking apparatus 1 is described in detail.

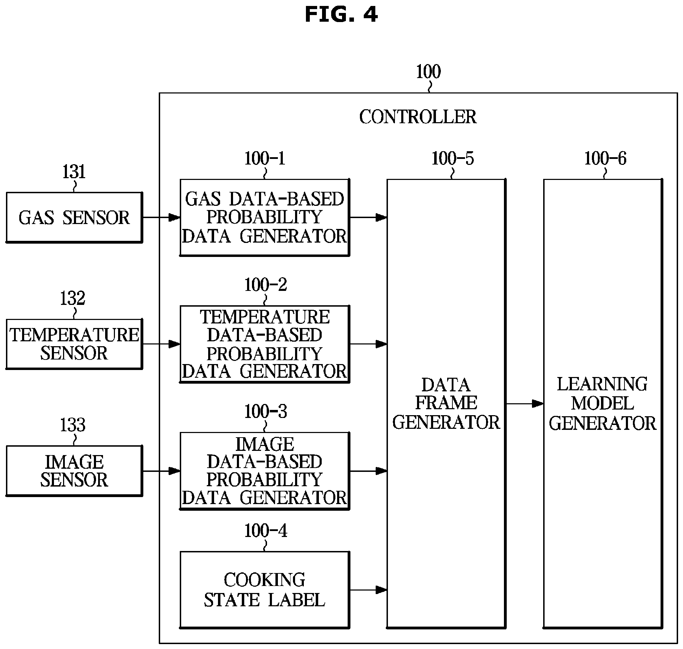

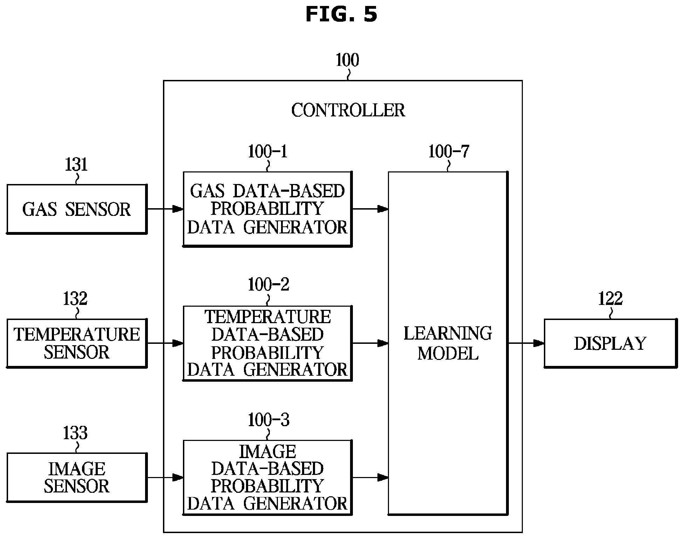

FIG. 4 is a schematic view illustrating that a controller of a cooking apparatus generates a learning model according to an embodiment. FIG. 5 is a schematic view illustrating that a controller of a cooking apparatus outputs a cooking state through a learning model according to an embodiment.

Referring to FIG. 4, the controller 100 may obtain gas data from the gas sensor 131, temperature data from the temperature sensor 132, and image data from the image sensor 133.

The controller 100 may include a gas data-based probability data generator 100-1 and may generate probability data for each cooking stage based on the collected gas data. Here, the cooking stage may include stages of 'undercooked', 'properly cooked', 'overcooked', and 'burnt', without being limited thereto. Additional cooking stages may be further included in the above cooking stages. For example, the controller 100 may determine gas data-based probability data for each cooking stage to be 0.1 for undercooked (Pvu), 0.6 for properly cooked (Pvk), and 0.3 for overcooked (Pvv).

Similarly, the controller 100 may include a temperature data-based probability data generator 100-2, and may generate probability data for each cooking stage based on the collected temperature data. For example, the controller 100 may determine temperature data-based probability data for each cooking stage to be 0.4 for undercooked (Ppu), 0.5 for properly cooked (Ppk), and 0.1 for overcooked (Ppv).

Similarly, the controller 100 may include an image data-based probability data generator 100-3 and may generate probability data for each cooking stage based on the collected image data. For example, the controller 100 may determine image data-based probability data for each cooking stage to be 0.4 for undercooked (Pcu), 0.5 for properly cooked (Pck), and 0.1 for overcooked (Pcv).

The controller 100 may include a data frame generator 100-5. The controller 100 may generate a data frame with probability data for each cooking stage obtained from each of the sensors as an independent variable and a cooking state label 100-4 as a dependent variable.

The controller 100 may include a learning model generator 100-6, and may generate a learning model with a data frame as an input value and a cooking state as an output value. In this instance, the learning model may include a regression learning model learned through regression analysis, and the controller 100 may output a cooking state by applying a preset weight to probability data for each cooking stage.

**In** this instance, the weights may be preset according to a type of food, elapsed cooking time, or external environment, and may be stored in the memory 102. The weight for each cooking stage may be expressed as follows:

Weight for undercooked: $\begin{pmatrix} Wcu \\ Wvu \\ Wpu \end{pmatrix}$, Weight for properly cooked: $\begin{pmatrix} Wck \\ Wvk \\ Wpk \end{pmatrix}$, Weight for overcooked: $\begin{pmatrix} Wcv \\ Wvv \\ Wpv \end{pmatrix}$.

Here, Wcu denotes a weight for undercooked based on the image sensor 133, Wvu denotes a weight for undercooked based on the gas sensor 131, and Wpu denotes a weight for undercooked based on the temperature sensor 132. Wck denotes a weight for properly cooked based on the image sensor 133, Wvk denotes a weight for properly cooked based on the gas sensor 131, and Wpk denotes a weight for properly cooked based on the temperature sensor 132. Wcv denotes a weight for overcooked based on the image sensor 133, Wvv denotes a weight for overcooked based on the gas sensor 131, and Wpv denotes a weight for overcooked based on the temperature sensor 132.

The controller 100 may generate a learning model 100-7 to obtain cooking state probability data by multiplying probability data for each cooking stage by the preset weights as shown below.

Probability data for undercooked:

$$(Pcu \quad Pvu \quad Ppu) \begin{pmatrix} Wcu \\ Wvu \\ Wpu \end{pmatrix}$$

, Probability data for properly cooked:

$$(Pck \quad Pvk \quad Ppk) \begin{pmatrix} Wck \\ Wvk \\ Wpk \end{pmatrix}$$

, Probability data for overcooked:

$$(Pcv \quad Pvv \quad Ppv) \begin{pmatrix} Wcv \\ Wvv \\ Wpv \end{pmatrix}$$

Referring back to FIG. 5, the controller 100 may obtain gas data from the gas sensor 131, temperature data from the temperature sensor 132, and image data from the image sensor 133.

The controller 100 may include the gas data-based probability data generator 100-1, and may generate probability data for each cooking stage based on the collected gas data. Similarly, the controller 100 may include the temperature data-based probability data generator 100-2, and may generate probability data for each cooking stage based on the collected temperature data. Similarly, the controller 100 may include the image data-based probability data generator 100-3, and may generate probability data for each cooking stage based on the collected image data.

The controller 100 may apply weights by inputting probability data for each cooking stage into the generated learning model, and may output, to the display 122, a cooking state corresponding to the highest probability data among cooking state probability data obtained by applying the weights.

For example, the controller 100 may obtain the probability data for each cooking stage in an order of undercooked, properly cooked, and overcooked. For image data, gas data, and temperature data, the probability data for each cooking stage may be obtained as (0.3 0.6 0.1), (0.1 0.6 0.3), and (0.4 0.5 0.1), respectively.

Thereafter, the controller 100 may apply weights for each cooking stage. For undercooked,

$$(0.3 \quad 0.1 \quad 0.4) \begin{pmatrix} 0.3 \\ 0.3 \\ 0.4 \end{pmatrix}$$

may be applied. For properly cooked, $(0.6 \ 0.6 \ 0.5) \begin{pmatrix} 0.2 \\ 0.5 \\ 0.3 \end{pmatrix}$ may be applied. For overcooked, $(0.1 \quad 0.3 \quad 0.1) \begin{pmatrix} 0.2 \\ 0.3 \\ 0.6 \end{pmatrix}$ may be applied.

As a result, from among 0.28 which is a result of the undercooked stage, 0.57 which is a result of the properly cooked stage, and 0.17 which is a result of the overcooked stage, the controller 100 may determine the 'properly cooked stage' showing the largest value 0.57 as a current cooking state. The controller 100 may output a notification message corresponding to proper cooking to the display 122.

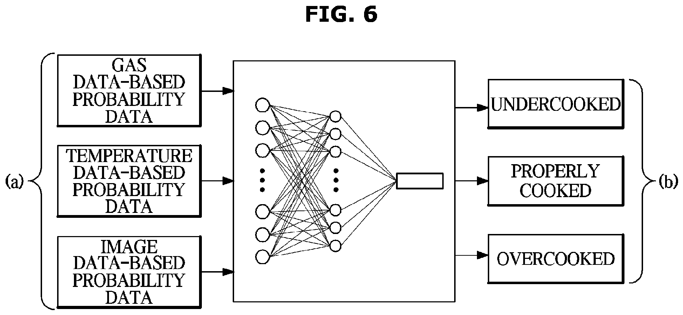

FIG. 6 is a schematic view illustrating that a controller of a cooking apparatus derives an output value according to an input value based on machine learning according to an embodiment.

The controller 100 may train an artificial neural network using gas data-based probability data, temperature data-based probability data, and image data-based probability data as training data (a).

In a case where the controller 100 includes an AI-specific processor 101 (e.g., Neural network Processing Unit (NPU)) for training the artificial neural network, the processor 101 may use weight data stored in the memory 102 as training data for the artificial neural network to train the artificial neural network.

For example, a learning algorithm may include a supervised learning, unsupervised learning, semi-supervised learning, and reinforcement learning, without being limited thereto.

The artificial neural network may be composed of multiple neural network layers. Each of the plurality of layers has a plurality of weight values, and performs neural network operations through computation between results of the previous layer's operations and the plurality of weight values. The plurality of weight values of the plurality of layers may be optimized by the training results of the AI model. For example, the plurality of weight values may be updated to reduce or minimize loss values or cost values obtained by the AI model during the training process.

The artificial neural network may include, for example, a Deep Neural Network (DNN), a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), a deep Q-network, without being limited thereto.

Based on the selected AI model, the controller 100 may learn a correlation between a cooking state and gas data-based probability data, temperature data-based probability data, image data-based probability data, and the cooking state label 100-4.

Specifically, based on a regression learning model using, as input values, the gas data-based probability data, the temperature data-based probability data, the image data-based probability data of the cooking chamber 20 over time, and the cooking state label 100-4, the controller 100 may output a cooking state (b) including the undercooked, properly cooked, and overcooked.

The regression learning model may include linear regression, ridge regression, lasso regression, and the like. The regression learning model is not limited as long as it may derive a cooking state by using, as input values, a difference in internal temperature data, humidity data, and gas data of the cooking chamber 20 over time.

Accordingly, the cooking apparatus 1 according to an embodiment may derive a state or degree of cooking based on an output value of the sensor module 130 through machine learning, and thus an accuracy of determining a cooking state may be improved even when cooking conditions or environment changes.

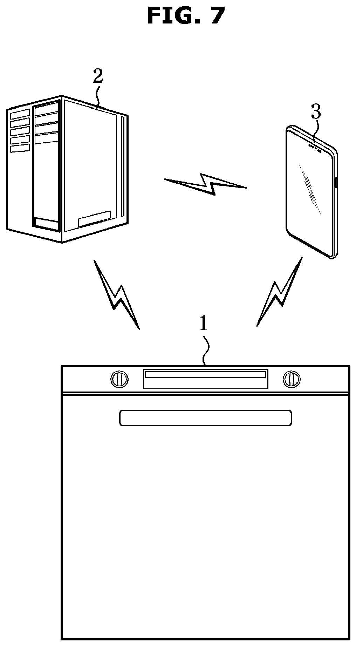

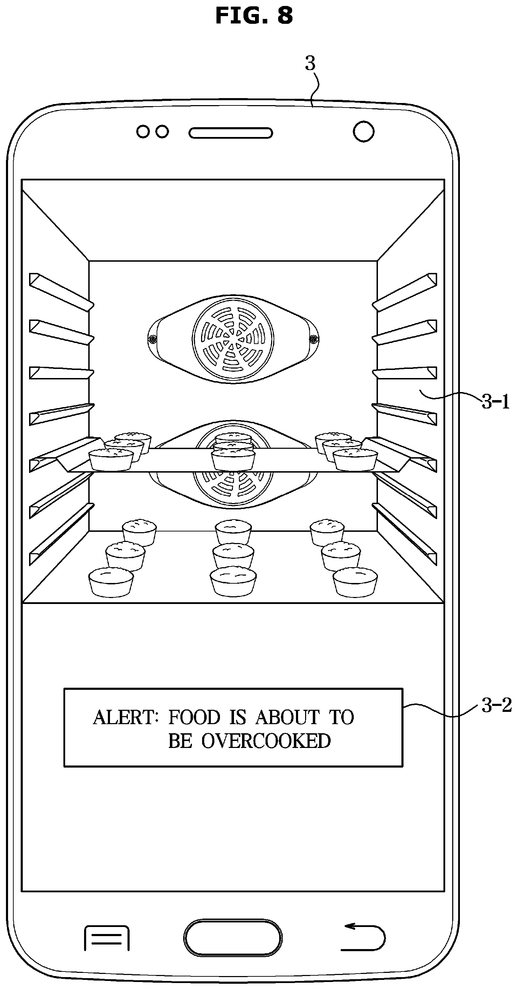

FIG. 7 illustrates communication among a server device, a user terminal device, and a cooking apparatus according to an embodiment. FIG. 8 illustrates that an overcooking prediction alert is output to a user terminal device by a cooking apparatus according to an embodiment.

As shown in FIG. 7, the cooking apparatus 1 and external devices may communicate with each other or transmit and receive information through the communication circuitry 110 included in the cooking apparatus 1. That is, a user may input a control command related to an operation of the cooking apparatus 1 through the external device, and the input control command may be received by the communication circuitry 110 of the cooking apparatus 1 through a network.

In addition, the cooking apparatus 1 may communicate with the user terminal device 3 using communication with the server device 2.

Specifically, the controller 100 may transmit a notification about whether food is overcooked or is about to be overcooked to the user terminal device 3 included in the external device. For example, the controller 100 may output a notification message, such as 'food is overcooked' or 'food is about to be overcooked', to the display 122 of the cooking apparatus 1, and may transmit the notification message and sound to the user terminal device 3 and alert a user by a beep sound simultaneously.

Accordingly, the user may immediately determine a cooking state of the food from the user terminal device 3 even when he or she is not located close to the cooking apparatus 1, thereby increasing user convenience.

In addition, image information about an interior of the cooking chamber 20 captured by the image sensor 133 may be transmitted to the external device through a network. Even when a user is located far from the cooking apparatus 1, the user may determine a cooking state of food in the cooking chamber 20 through the external device. The user may check an image of food captured by the image sensor 133 through the external device without directly operating the cooking apparatus 1 or directly seeing the cooking state, and may input a control command related to cooking to the external device. Thus, user convenience may be increased.

Referring to FIG. 8, the controller 100 may control the image sensor 133 to capture food, and transmit the captured image or video to the user terminal device 3. Accordingly, an image 3-1 of the interior of the cooking chamber 20 may be displayed on the user terminal device 3, and at the same time, a notification message 3-2 such as "food is about to be overcooked" may be output.

As a result, the user may directly check the cooking state through the image sensor 133 and receive the notification message, thereby determining the cooking state more accurately.

In addition, before the food burns, the controller 100 may transmit information about how much time remains until the food burns, to the user terminal device 3.

That is, a gauge may be displayed as a bar or color gradient to indicate cooking states ranging from proper cooking to burning. Accordingly, a user may intuitively see how much time is left before the food burns, making cooking more convenient.

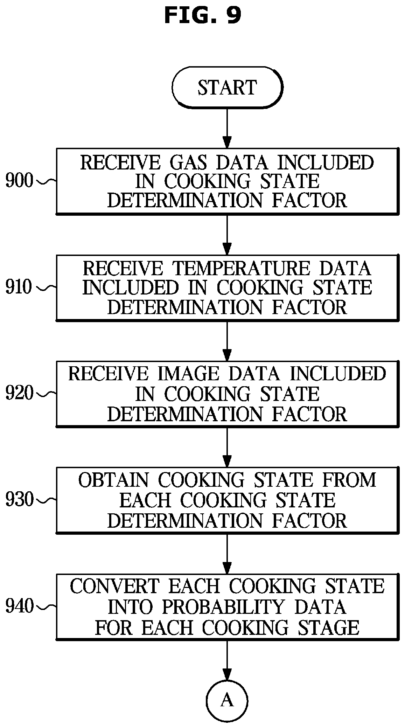

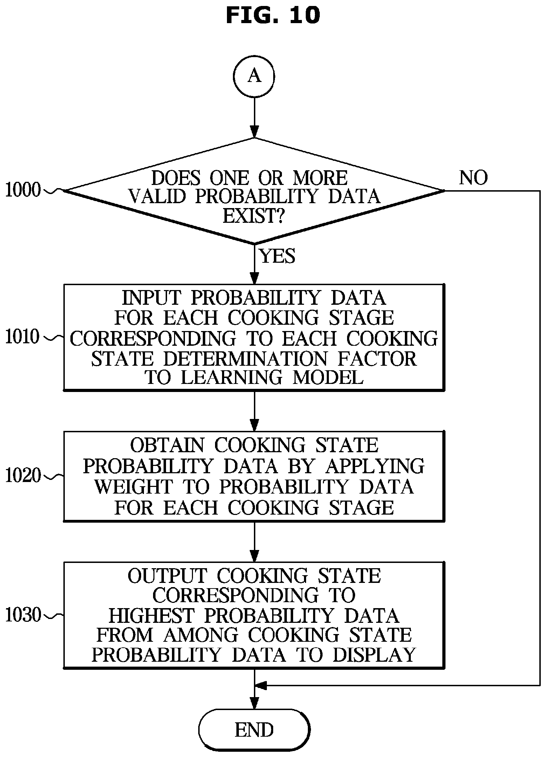

FIG. 9 is a flowchart illustrating a method of controlling a cooking apparatus according to an embodiment. FIG. 10 is a flowchart illustrating the control method according to an embodiment, in continuation from FIG. 9.

Referring to FIG. 9, the controller 100 may receive gas data included in a cooking state determination factor from the gas sensor 131 (900), receive temperature data from the temperature sensor 132 (910), and receive image data from the image sensor 133 (920).

The controller 100 may obtain a cooking state for each time period from each of the cooking state determination factors (930). For example, the controller 100 may determine a cooking state for each time period, as 'undercooked', 'properly cooked', and 'overcooked', based on the gas data.

The controller 100 may convert each cooking state into probability data for each cooking stage (940).

Referring to FIG. 10, the controller 100 may determine whether the converted probability data is valid (1000), and in a case where one or more valid probability data exists (Yes in operation 1000), probability data for each cooking stage corresponding to each of the cooking state determination factors may be input to a learning model (1010).

Afterwards, in the learning model, weights may be applied to the probability data for each cooking stage to obtain cooking state probability data (1020).

The controller 100 may output a cooking state corresponding to the highest probability data from among the obtained cooking state probability data to the display (1030), and may transmit the cooking state to the server to transmit to other home appliances.

Thus, the cooking apparatus 1 according to an embodiment may allow a user to check a cooking state of food without opening a door of the cooking apparatus 1, thereby reducing cooking mistakes.

According to an embodiment, the cooking apparatus 1 may include a cooking chamber 20 configured to accommodate an object; the sensor module 130 configured to measure a plurality of cooking state determination factors of the object during cooking of the object in the cooking chamber; a display 122; and the controller 100 configured to perform control to: obtain cooking state probability data for each cooking stage of a plurality of cooking stages of the object from the measured plurality of cooking state determination factors, and output, via the display 122, information about a cooking state of the object corresponding to a highest cooking state probability of the obtained cooking state probability data.

The controller 100 may be configured to perform control to convert a cooking state, obtained from each of the plurality of cooking state determination factors into probability data for each cooking stage to obtain the cooking state probability data.

The controller 100 may be configured to perform control to apply a preset weight to the probability data for each cooking stage to obtain the cooking state probability data.

The controller 100 may be configured to perform control to input the probability data for each cooking stage into a machine learning model trained from cooking state result data to obtain the cooking state probability data.

The controller 100 may be configured to perform control to obtain the cooking state probability data, based on a regression learning model using the cooking state result data and the probability data for each cooking stage as an input value.

The controller 100 may be configured to input the probability data for each cooking stage into the machine learning model, based on the probability data for each cooking stage having at least one valid value.

The plurality of cooking state determination factors of the object may include gas data, temperature data, and color data of the object during a cooking time.

According to an embodiment, the method of controlling the cooking apparatus 1 may include the cooking chamber 20 configured to accommodate an object, the sensor module 130 configured to measure a plurality of cooking state determination factors of the object during cooking of the object in the cooking chamber, and the display 122, the method comprising: obtaining cooking state probability data for each cooking stage of a plurality of cooking stages of the object from the measured plurality of cooking state determination factors; and outputting, via the display 122, information about a cooking state of the object corresponding to a highest cooking state probability of the obtained cooking state probability data.

The obtaining of the cooking state probability data converts a cooking state, obtained from each of the plurality of cooking state determination factors into probability data for each cooking stage to obtain the cooking state probability data.

According to an embodiment, the method of controlling the cooking apparatus 1 may further include applying a preset weight to the probability data for each cooking stage to obtain the cooking state probability data.

According to an embodiment, the method of controlling the cooking apparatus 1 may further include inputting the probability data for each cooking stage into a machine learning model trained from cooking state result data to obtain the cooking state probability data.

The obtaining of the cooking state probability data obtains the cooking state probability data, based on a regression learning model using the cooking state result data and the probability data for each cooking stage as an input value.

According to an embodiment, the method of controlling the cooking apparatus 1 may further include inputting the probability data for each cooking stage into the machine learning model, based on the probability data for each cooking stage having at least one valid value.

The plurality of cooking state determination factors include gas data, temperature data, and color data of the object during a cooking time.

According to an embodiment, the cooking apparatus 1 may include a cooking chamber 20 configured to accommodate an object; a sensor module 130 configured to measure a plurality of cooking state determination factors of the object during cooking of the object in the cooking chamber 20; a display 122; communication circuitry 110 configured to communicate with an external server; and a controller 100 configured to perform control to: transmit, to the external server via the communication circuitry 110, cooking state probability data for each cooking stage of a plurality of cooking stages of the object from the measured plurality of cooking state determination factors, receive, from the external server via the communication circuitry 110, information about a cooking state of the object corresponding to a highest cooking state probability of the transmitted cooking state probability data, and output, via the display 122, the information about the cooking state of the object.

The disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be a Read Only Memory (ROM), a Random Access Memory (RAM), a magnetic tape, a magnetic disk, a flash memory, an optical data storage device, etc.

Furthermore, the computer-readable recording medium may be provided in the form of a non-transitory storage medium. The term 'non-transitory storage medium' may mean a tangible device without including a signal (e.g., electromagnetic waves) and may not distinguish between storing data in the storage medium semi-permanently and temporarily. For example, the non-transitory storage medium may include a buffer that temporarily stores data.

The method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store™), directly between two user devices (e.g., smartphones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

While the disclosure has been particularly shown and described with reference to embodiments thereof, it will be understood that various changes in form and details may be made therein without departing from the spirit and scope of the following claims.

## Claims

1. A cooking apparatus, comprising:

   a cooking chamber configured to accommodate an object;
   a sensor module configured to measure a plurality of cooking state determination factors of the object during cooking of the object in the cooking chamber;
   a display; and
   a controller configured to perform control to:

   obtain cooking state probability data for each cooking stage of a plurality of cooking stages of the object from the measured plurality of cooking state determination factors, and
   output, via the display, information about a cooking state of the object corresponding to a highest cooking state probability of the obtained cooking state probability data.

2. The cooking apparatus of claim 1, wherein the controller is configured to perform control to convert a cooking state, obtained from each of the plurality of cooking state determination factors into probability data for each cooking stage to obtain the cooking state probability data.

3. The cooking apparatus of claim 2, wherein the controller is configured to perform control to apply a preset weight to the probability data for each cooking stage to obtain the cooking state probability data.

4. The cooking apparatus of claim 3, wherein the controller is configured to perform control to input the probability data for each cooking stage into a machine learning model trained from cooking state result data to obtain the cooking state probability data.

5. The cooking apparatus of claim 4, wherein the controller is configured to perform control to obtain the cooking state probability data, based on a regression learning model using the cooking state result data and the probability data for each cooking stage as an input value.

6. The cooking apparatus of claim 4, wherein the controller is configured to perform control to input the probability data for each cooking stage into the machine learning model, based on the probability data for each cooking stage having at least one valid value.

7. The cooking apparatus of claim 1, wherein the plurality of cooking state determination factors of the object include gas data, temperature data, and color data of the object during a cooking time.

8. A method of controlling a cooking apparatus including a cooking chamber configured to accommodate an object, a sensor module configured to measure a plurality of cooking state determination factors of the object during cooking of the object in the cooking chamber, and a display, the method comprising:

   obtaining cooking state probability data for each cooking stage of a plurality of cooking stages of the object from the measured plurality of cooking state determination factors; and
   outputting, via the display, information about a cooking state of the object corresponding to a highest cooking state probability of the obtained cooking state probability data.

9. The method of claim 8, wherein the obtaining of the cooking state probability data converts a cooking state, obtained from each of the plurality of cooking state determination factors into probability data for each cooking stage to obtain the cooking state probability data.

10. The method of claim 9, further comprising: applying a preset weight to the probability data for each cooking stage to obtain the cooking state probability data.

11. 11. The method of claim 10, further comprising: inputting the probability data for each cooking stage into a machine learning model trained from cooking state result data to obtain the cooking state probability data.

**12.** The method of claim 11, wherein the obtaining of the cooking state probability data obtains the cooking state probability data, based on a regression learning model using the cooking state result data and the probability data for each cooking stage as an input value.

**13.** The method of claim 11, further comprising: inputting the probability data for each cooking stage into the machine learning model, based on the probability data for each cooking stage having at least one valid value.

**14.** The method of claim 8, wherein the plurality of cooking state determination factors include gas data, temperature data, and color data of the object during a cooking time.

**15.** A cooking apparatus, comprising:

a cooking chamber configured to accommodate an object;
a sensor module configured to measure a plurality of cooking state determination factors of the object during cooking of the object in the cooking chamber;
a display;
communication circuitry configured to communicate with an external server; and
a controller configured to perform control to:

transmit, to the external server via the communication circuitry, cooking state probability data for each cooking stage of a plurality of cooking stages of the object from the measured plurality of cooking state determination factors,
receive, from the external server via the communication circuitry, information about a cooking state of the object corresponding to a highest cooking state probability of the transmitted cooking state probability data, and
output, via the display, the information about the cooking state of the object.

# FIG. 1

1

**FIG. 2**

# FIG. 3

**FIG. 4**

100

CONTROLLER

131
GAS SENSOR

132
TEMPERATURE SENSOR

133
IMAGE SENSOR

100-1
GAS DATA-BASED PROBABILITY DATA GENERATOR

100-2
TEMPERATURE DATA-BASED PROBABILITY DATA GENERATOR

100-3
IMAGE DATA-BASED PROBABILITY DATA GENERATOR

100-4
COOKING STATE LABEL

100-5
DATA FRAME GENERATOR

100-6
LEARNING MODEL GENERATOR

# FIG. 5

# FIG. 6

# FIG. 7

# FIG. 8

3

3-1

3-2

ALERT: FOOD IS ABOUT TO
BE OVERCOOKED

# FIG. 9

START

900 → RECEIVE GAS DATA INCLUDED IN COOKING STATE DETERMINATION FACTOR

910 → RECEIVE TEMPERATURE DATA INCLUDED IN COOKING STATE DETERMINATION FACTOR

920 → RECEIVE IMAGE DATA INCLUDED IN COOKING STATE DETERMINATION FACTOR

930 → OBTAIN COOKING STATE FROM EACH COOKING STATE DETERMINATION FACTOR

940 → CONVERT EACH COOKING STATE INTO PROBABILITY DATA FOR EACH COOKING STAGE

A

# FIG. 10

A

1000 — DOES ONE OR MORE
VALID PROBABILITY DATA
EXIST?

NO

YES

1010 — INPUT PROBABILITY DATA
FOR EACH COOKING STAGE
CORRESPONDING TO EACH COOKING
STATE DETERMINATION FACTOR
TO LEARNING MODEL

1020 — OBTAIN COOKING STATE
PROBABILITY DATA BY APPLYING
WEIGHT TO PROBABILITY DATA
FOR EACH COOKING STAGE

1030 — OUTPUT COOKING STATE
CORRESPONDING TO
HIGHEST PROBABILITY DATA
FROM AMONG COOKING STATE
PROBABILITY DATA TO DISPLAY

END

## INTERNATIONAL SEARCH REPORT

| International application No. |
| --- |
| **PCT/KR2024/001087** |

| A. | CLASSIFICATION OF SUBJECT MATTER |
| --- | --- |

**F24C 7/08**(2006.01)i; **F24C 3/12**(2006.01)i; **H05B 6/68**(2006.01)i; **F24C 15/00**(2006.01)i; **H04N 23/57**(2023.01)i; **G06F 3/00**(2006.01)i; **G06V 20/68**(2022.01)i; **G06N 20/00**(2019.01)i

According to International Patent Classification (IPC) or to both national classification and IPC

| B. | FIELDS SEARCHED |
| --- | --- |

Minimum documentation searched (classification system followed by classification symbols)

F24C 7/08(2006.01); F24C 15/00(2006.01); F24C 7/02(2006.01); F24C 7/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: cooker, food, status, factor, sensor, display, step, probability, machine learning, effective, time, temperature, gas, color

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2018-077562 A (SHARP CORP.) 17 May 2018 (2018-05-17)<br>See paragraphs [0011]-[0047]; and figures 1-6. | 1-15 |
| Y | KR 10-1390397 B1 (COMTOOROO CO., LTD.) 30 April 2014 (2014-04-30)<br>See paragraphs [0025]-[0096]; and figures 1-11. | 1-15 |
| Y | KR 10-2021-0066452 A (LG ELECTRONICS INC.) 07 June 2021 (2021-06-07)<br>See paragraphs [0137]-[0169]; and figures 6-7. | 4-6,11-13 |
| A | JP 2015-194286 A (MITSUBISHI ELECTRIC CORP. et al.) 05 November 2015 (2015-11-05)<br>See paragraphs [0009]-[0082]; and figures 1-18. | 1-15 |
| A | JP 2018-124018 A (SHARP CORP.) 09 August 2018 (2018-08-09)<br>See paragraphs [0009]-[0094]; and figures 1-9. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 May 2024** | **20 May 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001087**

| Patent document cited in search report | | | Publication date (day/month/year) | Patent family member(s) | | | Publication date (day/month/year) |
|---|---|---|---|---|---|---|---|
| JP | 2018-077562 | A | 17 May 2018 | None | | | |
| KR | 10-1390397 | B1 | 30 April 2014 | KR | 10-2013-0136903 | A | 13 December 2013 |
| KR | 10-2021-0066452 | A | 07 June 2021 | US | 2021-0161329 | A1 | 03 June 2021 |
| JP | 2015-194286 | A | 05 November 2015 | JP | 6270591 | B2 | 31 January 2018 |
| JP | 2018-124018 | A | 09 August 2018 | JP | 6850141 | B2 | 31 March 2021 |

Form PCT/ISA/210 (patent family annex) (July 2022)